# EUROPÄISCHE PATENTSCHRIFT

(11) **EP 0 617 910 B1**
(45) Veröffentlichungstag und Bekanntmachung des Hinweises auf die Patenterteilung: **05.08.1998**
(21) Anmeldenummer: 94102869.8
(22) Anmeldetag: 25.02.1994
(51) Int. Cl.: A47J 43/08

(54) **Antriebseinrichtung für eine Küchenmaschine**
Drive unit for kitchen apparatus
Dispositif d'entraînement d'un appareil ménager

(30) Priorität: 02.04.1993 DE 4310847
(43) Veröffentlichungstag der Anmeldung: 05.10.1994
(73) Patentinhaber: Braun Aktiengesellschaft, Frankfurt am Main (DE)
(72) Erfinder: Rius, Antonio Rebordosa, D-61440 Oberursel (DE); Golob, Jürgen, D-61381 Friedrichsdorf (DE)

(56) Entgegenhaltungen:
- DE-A- 3 546 506
- DE-B- 1 155 887
- DE-C- 1 289 966
- FR-A- 2 240 386
- GB-A- 589 491
- GB-A- 993 271

## Beschreibung

Die Erfindung betrifft eine Küchenmaschine mit einer Antriebseinrichtung, mit einem Antriebsmotor und einem Getriebe mit einem Werkzeugabtrieb zum Ankuppeln von Werkzeugen, die durch den Werkzeugabtrieb bei gegebener Motordrehzahl mit zwei unterschiedlichen Drehzahlen antreibbar sind.

Aus der DE-PS 34 33 008 ist eine Küchenmaschine mit einer Antriebseinrichtung bekannt, die zwei mit unterschiedlichen Drehzahlen angetriebene, zueinander konzentrische Abtriebswellen hat, wobei die einander benachbarten Enden der beiden Abtriebswellen jeweils eine Kupplung zum Ankuppeln von Werkzeugen aufweisen. Die innere, schnellaufende Abtriebswelle wird hierbei durch die Motorwelle gebildet und die als Hohlwelle ausgebildete, langsam laufende Abtriebswelle wird über ein Planetengetriebe angetrieben, dessen Sonnenrad mit der Motorwelle und dessen Planetenträger mit der Hohlwelle verbunden ist. Diese bekannte Antriebseinrichtung ist verhältnismäßig aufwendig. Sie benötigt zwei unterschiedliche Kupplungen zum Ankuppeln der Werkzeuge und sie erfordert eine zum Werkzeugabtrieb koaxiale Anordnung des Motors.

Der Erfindung liegt die Aufgabe zugrunde, eine Küchenmaschine mit einer Antriebseinrichtung der eingangs genannten Art zu schaffen, die lediglich eine Abtriebswelle aufweist und sich durch eine einfache, kostengünstige und kompakte Bauweise auszeichnet.

Diese Aufgabe wird erfindungsgemäß durch die kennzeichnenden Merkmale des Patentanspruchs 1 gelöst.

Bei der erfindungsgemäßen Antriebseinrichtung ist nur eine Abtriebswelle vorgesehen, die mit Hilfe eines Wechselgetriebes mit unterschiedlichen Drehzahlen antreibbar ist. Das Umschalten von einer Drehzahl auf eine andere erfolgt durch eine Lageänderung der Abtriebswelle in axialer Richtung, die durch das jeweils anzukuppelnde Werkzeug bewirkt wird. Das Einschalten des geeigneten Übersetzungsverhältnisses erfolgt daher durch das jeweils anzukuppelnde Werkzeug, so daß den unterschiedlichen Werkzeugen jeweils automatisch die geeignete Antriebsübersetzung zugeordnet wird. Separate Schalteinrichtungen zum Schalten des Wechselgetriebes sind dabei nicht erforderlich. Es genügt daher, das an den Werkzeugen befindliche Kupplungsstück der Werkzeugkupplung so zu positionieren, daß die Abtriebswelle beim Montieren des Werkzeugs in die hierfür bestimmte Schaltposition gedrückt wird.

Nach einem weiteren Vorschlag der Erfindung kann vorgesehen sein, daß die Abtriebswelle des Wechselgetriebes durch die Kraft einer in axialer Richtung an der Abtriebswelle abgestützten Feder in der ersten Stellung gehalten wird, in der die Drehzahl der Abtriebswelle kleiner ist und in der das mit einer Werkzeugkupplung versehene Abtriebsende der Abtriebswelle weiter aus dem Getriebe herauragt. Bei dieser Ausgestaltung läßt sich das Wechselgetriebe durch eine die Federkraft überwindende axiale Druckkraft auf einfache Weise aus der ersten Stellung in eine zweite oder auch dritte Stellung umschalten. Ist kein Werkzeug angekuppelt, so wird die Abtriebswelle durch die Feder in die langsam drehende Schaltposition zurückbewegt. Die langsamer drehenden Werkzeuge benötigen daher keine besonderen Mittel zum Verschieben der Abtriebswelle und können ausschließlich auf der Abtriebswelle gelagert sein. Die zum axialen Verschieben der Abtriebswelle vorgesehenen Werkzeuge weisen erfindungsgemäß ein Axiallager auf, das am Gehäuse der Küchenmaschine befestigbar ist und die Werkzeugkupplung in axialer Richtung positioniert. Als Feder zum Beaufschlagen der Abtriebswelle in axialer Richtung kann erfindungsgemäß eine Blattfeder vorgesehen sein, an der das dem Abtriebsende entgegengesetzte Ende der Abtriebswelle abgestützt ist.

Nach einem weiteren Vorschlag der Erfindung kann zum Kuppeln der Abtriebswelle im Getriebe eine Vielzahnkupplung vorgesehen sein, wobei die Abtriebswelle ein außenverzahntes Kupplungsritzel und die Getrieberäder innen verzahnte Kupplungsbohrungen aufweisen. Eine derartige Vielzahnkupplung ist einfach herstellbar und leicht einkuppelbar. Das Wechselgetriebe kann erfindungsgemäß ein langsam laufendes Vorgelege mit zwei Räderpaaren aufweisen, die kontinuierlich miteinander in Eingriff sind. Diese Ausgestaltung des Getriebes ermöglicht eine kompakte Bauweise bei geringem Bauaufwand und eignet sich besonders für das erfindungsgemäße Umschalten mit Hilfe der axial bewegbaren Abtriebswelle. Zur Erzielung einer geringen Bauhöhe und einer größeren Variabilität hinsichtlich der Anordnung des Motors kann erfindungsgemäß weiterhin vorgesehen sein, daß ein schnellaufendes, auf der Abtriebswelle gelagertes Getrieberad mit einem Schneckenrad verbunden ist, das mit einer von dem Motor angetriebenen Schnecke kämmt. Hierdurch wird eine Anordnung des Motors seitlich neben dem Wechselgetriebe ermöglicht, so daß sich die Bauhöhe des Motors nicht zur Bauhöhe des Wechselgetriebes addiert. Die innen verzahnte Kupplungsbohrung kann bei dieser Ausgestaltung vorteilhaft in dem Schneckenrad vorgesehen sein. Dies trägt zur Verringerung der Durchmesser der Getrieberäder bei und ermöglicht eine Anordnung von Schnecke und Motorwelle in der Mittel ebene des Wechselgetriebes.

Ein Ausführungsbeispiel der Erfindung ist in der Zeichnung dargestellt und wird im folgenden näher erläutert. Es zeigen
- Fig. 1: einen Querschnitt durch das Unterteil einer Küchenmaschine mit einer erfindungsgemäßen Antriebseinrichtung und
- Fig. 2: einen Querschnitt durch das Unterteil der Küchenmaschine gemäß Fig. 1 mit auf schnellen Abtrieb umgeschaltetem Wechselgetriebe.

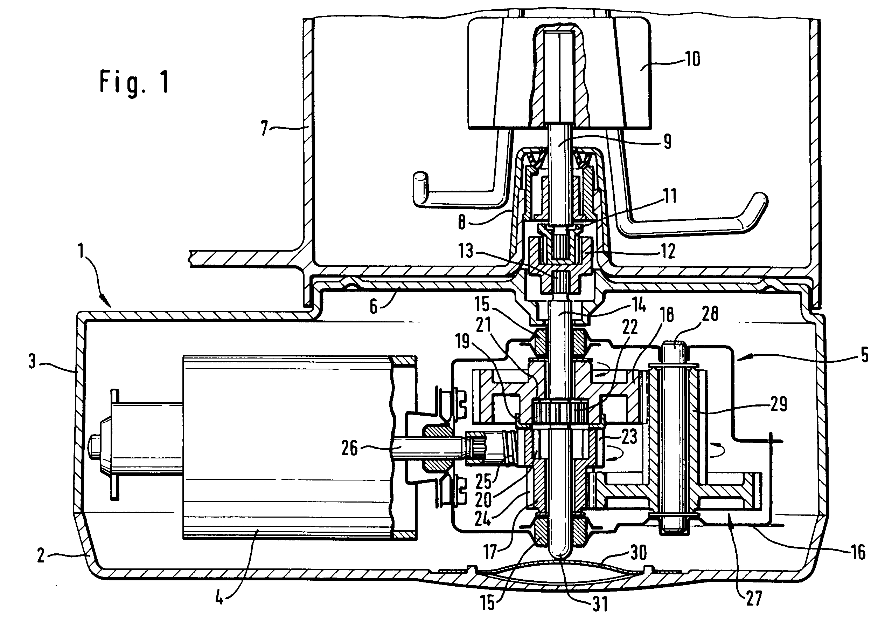

In Fig. 1 ist ein Gerätesockel 1 einer Küchenmaschine dargestellt, die zum Rühren, Mischen, Zerkleinern oder Kneten von Lebensmitteln dient. Der Gerätesockel 1 bildet ein Gehäuse, das aus einer Bodenplatte 2 und einem Oberteil 3 zusammengesetzt ist und eine aus einem elektrischen Antriebsmotor 4 und einem Wechselgetriebe 5 bestehende Antriebseinrichtung umgibt. Das Oberteil 3 weist einen zylindrischen Ansatz 6 auf, auf dem ein Arbeitsbehälter 7 befestigbar ist. Der Arbeitsbehälter 7 enthält einen zentralen Dom 8, in dem eine Werkzeugwelle 9 drehbar gelagert ist, die innerhalb des Arbeitsbehälters 7 ein Werkzeug 10 in Form eines Knethakens trägt. Das untere, im Inneren des Doms 8 befindliche Ende der Werkzeugwelle 9 ist mit einem Kupplungszapfen 11 versehen, der in eine im Zentrum des Oberteils 3 angeordnete Kupplungshülse 12 eingreift. Die Kupplungshülse 12 ist an einem aus dem Gerätesockel 1 herausragenden Abtriebsende 13 einer Abtriebswelle 14 der Antriebseinrichtung befestigt.

Die Abtriebswelle 14 ist Teil des Wechselgetriebes 5 und in Kalottenlagern 15 auf entgegengesetzten Seiten eines Getriebegehäuses 16 drehbar und axial verschiebbar gelagert. Innerhalb des Getriebegehäuses 16 sind auf der Abtriebswelle 14 ein schnellaufendes Getrieberad 17 und ein langsamlaufendes Getrieberad 18 frei drehbar gelagert. Die Getrieberäder 17, 18 sind in axialer Richtung an den Stirnseiten der Kalottenlager 15 sowie aneinander gelagert, wobei zwischen ihnen eine Lagerscheibe 19 angeordnet ist, die mit einem Kragen an dem Getrieberad 18 geführt ist. In ihren einander zugekehrten Stirnflächen weisen die Getrieberäder 17, 18 mit einer Innenverzahnung versehene Kupplungsbohrungen 20, 21 auf, in die je nach Stellung der Abtriebswelle 14 ein auf der Abtriebswelle 14 befestigtes, außen verzahntes Kupplungsritzel 22 eingreift.

Das Getrieberad 17 weist auf seiner Außenseite eine Stirnverzahnung 23 größeren Durchmessers und eine Stirnverzahnung 24 kleineren Durchmessers auf. In die dem Getrieberad 18 benachbarte Stirnverzahnung 23 greift eine Schnecke 25 ein, die auf einer tangential zur Abtriebswelle 14 in das Getriebegehäuse 16 hineinragenden Motorwelle 26 des Antriebsmotors 4 befestigt ist. Das Getrieberad 18 ist außen ebenfalls mit einer Stirnverzahnung versehen.

Die Getrieberäder 17, 18 stehen mit einem Vorgelege 27 in Eingriff, das aus einem auf einer festen Achse 28 drehbar gelagerten Stufenstirnrad 29 besteht.

In der Darstellung gemäß Fig. 1 greift das Kupplungsritzel 22 in die Kupplungsbohrung 21 im Getrieberad 18 ein. Die Abtriebswelle 14 befindet sich hierbei in ihrer oberen Stellung, in der die Kupplungshülse 12 weiter aus dem Gerätesockel herausragt. In dieser Stellung wird die Abtriebswelle 14 durch eine Blattfeder 30 gehalten, die an der Bodenplatte 2 befestigt ist und auf das dem Abtriebsende 13 entgegengesetzte Wellenende 31 der Abtriebswelle 14 einwirkt. Zur Verringerung der Reibung ist das Wellenende 31 abgerundet. Es liegt daher nur mit einer kleinen zentralen Berührungsfläche auf der Blattfeder 30 auf.

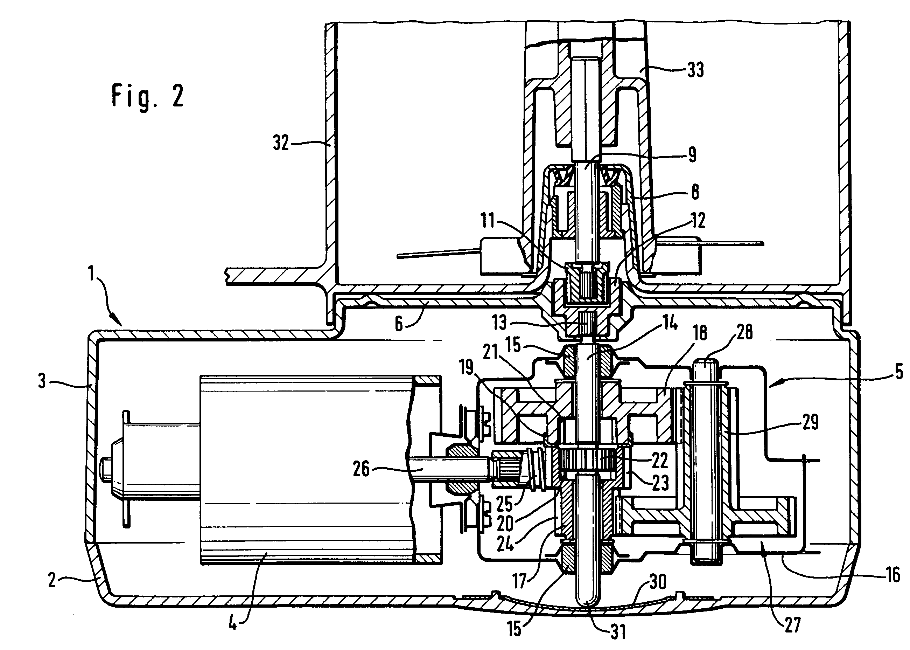

In der in Fig. 1 gezeigten Stellung ist die Abtriebswelle 14 an das Getrieberad 18 gekuppelt, das über das Vorgelege 27 angetrieben wird und mit entsprechend höherem Antriebsmoment langsamlaufend ist. Wird statt dessen ein schnellaufender Abtrieb benötigt, so wird, wie in Fig. 2 dargestellt, der Arbeitsbehälter 7 mit einem Arbeitsbehälter 32 vertauscht, der beispielsweise ein Werkzeug 33 in Form eines Schlagmessers enthält. Bei dem Arbeitsbehälter 32 ragt das untere, den Kupplungszapfen 11 tragende Ende der Werkzeugwelle 9 weiter aus dem Dom 8 heraus, so daß beim Aufsetzen des Arbeitsbehälters 32 die Abtriebswelle 14 unter Verformung der Blattfeder 30 in die dargestellte untere Lage gedrückt wird, in der das Kupplungsritzel 22 nur noch in die Kupplungsbohrung 20 eingreift. Die Abtriebswelle 14 ist nun von dem langsamlaufenden Getrieberad 18 getrennt und an das unmittelbar durch die Schnecke 25 angetriebene, schnellaufende Getrieberad 17 gekuppelt. Das Werkzeug 33 wird daher mit größerer Drehzahl und entsprechend geringerem Drehmoment angetrieben.

In beiden Stellungen der Abtriebswelle 14 kann zusätzlich durch entsprechende Steuerung des Antriebsmotors 4 eine Drehzahländerung bewirkt werden.

Das für einen schnellen Abtrieb erforderliche Verschieben der Abtriebswelle 14 gemäß Fig. 2 kann auch durch andere geeignete Mittel erfolgen, wenn beispielsweise nur ein einheitlicher Arbeitsbehälter vorgesehen ist. Es können beispielsweise die schnellaufenden Werkzeuge mit einem längeren Kupplungszapfen ausgestattet sein, oder es kann ein Zwischenstück vorgesehen sein, welches zur Erreichung des schnellaufenden Abtriebs zwischen Kupplungszapfen und Kupplungshülse eingesetzt wird.

## Patentansprüche

1. Küchenmaschine mit einer Antriebseinrichtung, mit einem Antriebsmotor (4) und einem Getriebe (5) mit einem Werkzeugabtrieb (14) zum Ankuppeln von unterschiedlichen Werkzeugen (10, 33), die durch den Werkzeugabtrieb (14) bei gegebener Motordrehzahl mit zwei unterschiedlichen Drehzahlen antreibbar sind,
**dadurch gekennzeichnet**,
daß das Getriebe (5) ein Wechselgetriebe mit einer einzigen, den Werkzeugabtrieb bildenden, axial verschiebbaren Abtriebswelle (14) ist, daß die Abtriebswelle (14) durch axiale Verschiebung aus einer ersten Stellung, in der sie mit einem ersten Getrieberad (18) gekuppelt ist, in eine zweite Stellung bewegbar ist, in der sie von dem ersten Getrieberad (18) getrennt und mit einem zweiten Getrieberad (17) oder der Motorwelle gekuppelt ist und daß das an den unterschiedlichen Werkzeugen (10, 33) befindliche Kupplungsstück der Werkzeugkupplung so am Werkzeug (10, 33) positioniert ist, daß beim Montieren des Werkzeugs (10, 33) die Abtriebswelle (14) in die für das Werkzeug (10, 33) vorbestimmte Schaltposition gelangt.

2. Küchenmaschine nach Anspruch 1,
**dadurch gekennzeichnet**,
daß die Abtriebswelle (14) durch die Kraft einer Feder (30) in der ersten Stellung gehalten wird, in der die Abtriebsdrehzahl kleiner ist und in der das mit einer Werkzeugkupplung (12) versehene Abtriebsende (13) der Abtriebswelle (14) weiter aus dem Wechselgetriebe (5) herausragt.

3. Küchenmaschine nach Anspruch 2,
**dadurch gekennzeichnet**,
daß das dem Abtriebsende (13) entgegengesetzte Wellenende (31) der Abtriebswelle (14) in axialer Richtung an einer Blattfeder (30) abgestützt ist.

4. Küchenmaschine nach einem der vorhergehenden Ansprüche,
**dadurch gekennzeichnet**,
daß die zum axialen Verschieben der Abtriebswelle (14) vorgesehenen Werkzeuge (33) ein Axiallager aufweisen, das am Gehäuse der Küchenmaschine befestigbar ist und die Werkzeugkupplung (11) in axialer Richtung positioniert.

5. Küchenmaschine nach einem der vorhergehenden Ansprüche,
**dadurch gekennzeichnet**,
daß zum Kuppeln der Abtriebswelle (14) eine Vielzahnkupplung vorgesehen ist, wobei die Abtriebswelle (14) ein außenverzahntes Kupplungsritzel (22) und die Getrieberäder (17, 18) innenverzahnte Kupplungsbohrungen (20, 21) aufweisen.

6. Küchenmaschine nach einem der vorhergehenden Ansprüche,
**dadurch gekennzeichnet**,
daß das Wechselgetriebe (5) ein langsamlaufendes Vorgelege (27) mit zwei Räderpaaren (17, 18, 29) aufweist, die kontinuierlich miteinander in Eingriff sind.

7. Küchenmaschine nach einem der vorhergehenden Ansprüche,
**dadurch gekennzeichnet**,
daß ein schnellaufendes Getrieberad (17, 24) auf der Abtriebswelle (14) mit einem Schneckenrad (17, 23) verbunden ist, das mit einer von dem Antriebsmotor (4) angetriebenen Schnecke (25) kämmt.

8. Küchenmaschine nach Anspruch 7,
**dadurch gekennzeichnet**,
daß die innenverzahnte Kupplungsbohrung (21) im Schneckenrad (17, 24) angeordnet ist.

## Claims

1. A kitchen appliance having a drive mechanism, including a drive motor (4) and a transmission means (5) with a tool output (14) for the coupling of different tools (10, 33) adapted to be driven by the tool output (14) at two different speeds of rotation at a given motor speed,
**characterized in that** the transmission means (5) is a variable-speed transmission (5) having a sole axially displaceable output shaft (14) providing the tool output, that the output shaft (14) is movable by axial displacement from a first position in which it is coupled to a first gear wheel (18), into a second position in which it is disengaged from the first gear wheel (18), being instead coupled to a second gear wheel (17) or to the motor shaft, and that the coupling member of the tool coupling means provided on the different tools (10, 33) is positioned on the tool (10, 33) in such fashion that on fitting the tool (10, 33) the output shaft (14) reaches the position predetermined for the tool (10, 33).

2. The kitchen appliance as claimed in claim 1,
**characterized in that** the output shaft (14) is held in the first position by the force of a spring (30), in which first position the output speed is reduced and the output end (13) of the output shaft (14) provided with a tool coupling means (12) protrudes from the variable-speed transmission (5) a greater amount.

3. The kitchen appliance as claimed in claim 2,
**characterized in that** the end (31) of the output shaft (14) opposite the output end (13) takes support upon a leaf spring (30) in an axial direction.

4. The kitchen appliance as claimed in any one of the preceding claims,
**characterized in that** the tools (33) provided for axial displacement of the output shaft (14) incorporate a thrust bearing attachable to the housing of the kitchen appliance and positioning the tool coupling means (11) in an axial direction.

5. The kitchen appliance as claimed in any one of the preceding claims,
**characterized in that** for coupling the output shaft (14) a multi-tooth coupling is provided, with the output shaft (14) including a coupling pinion (22) with external teeth, and the gear wheels (17, 18) including coupling bores (20, 21) with internal teeth.

6. The kitchen appliance as claimed in any one of the preceding claims,
**characterized in that** the variable-speed transmission (5) includes a slow-speed back gearing (27) having two pairs of gear wheels (17, 18, 29) which are in continuous engagement with each other.

7. The kitchen appliance as claimed in any one of the preceding claims,
**characterized in that** a high-speed gear wheel (17, 24) mounted on the output shaft (14) is connected with a worm gear (17, 23) which is in meshing engagement with a worm (25) driven by the drive motor (4).

8. The kitchen appliance as claimed in claim 7,
**characterized in that** the internally toothed coupling bore (21) is provided in the worm gear (17, 24).

## Revendications

1. Robot de cuisine comportant un dispositif d'entraînement, présentant un moteur d'entraînement (4) et une transmission (5) qui présente une prise d'entraînement (14) pour accoupler différents outils (10, 33), lesquels sont susceptibles d'être entraînés à deux différentes vitesses de rotation par la prise d'entraînement d'outils (14) pour une vitesse de rotation donnée du moteur, caractérisé en ce que la transmission (5) est une transmission à changement de vitesse comportant un seul arbre mené (14) axialement mobile et formant la prise d'entraînement d'outil, en ce que l'arbre mené (14) est commutable par un déplacement axial hors d'une première position dans laquelle il est accouplé à une première roue de transmission (18) jusque dans une seconde position dans laquelle il est séparé de la première roue de transmission (18) et accouplé à une seconde roue de transmission (17) ou bien à l'arbre moteur, et en ce que la pièce d'accouplement de l'accouplement d'outil, qui se trouve sur les différents outils (10, 33), est positionnée de telle sorte sur l'outil (10, 33) que lors du montage de l'outil (10, 33) l'arbre mené (14) parvient dans la position de commutation prédéterminée pour l'outil (10, 33).

2. Robot de cuisine selon la revendication 1, caractérisé en ce que l'arbre mené (14) est retenu par la force d'un ressort (30) dans la première positon dans laquelle la vitesse de rotation d'entraînement est plus petite et dans laquelle l'extrémité menée (13) de l'arbre mené (14) qui est pourvue d'un accouplement d'outil (12) dépasse plus loin hors de la transmission à changement de vitesse (5).

3. Robot de cuisine selon la revendication 2, caractérisé en ce que l'extrémité (31) de l'arbre mené (14) opposée à l'extrémité menée (13) est appuyée en direction axiale contre un ressort à lame (30).

4. Robot de cuisine selon l'une quelconque des revendications précédentes, caractérisé en ce que les outils (33) prévus pour le déplacement axial de l'arbre mené (14) présentent un palier axial qui est susceptible d'être fixé sur le boîtier du robot de cuisine et qui positionne l'accouplement d'outil (11) en direction axiale.

5. Robot de cuisine selon l'une quelconque des revendications précédentes, caractérisé en ce qu'il est prévu un accouplement à dents multiples pour accoupler l'arbre mené (14), l'arbre mené (14) présentant un pignon d'accouplement (22) à denture extérieure et les roues de transmission (17, 18) présentant des perçages d'accouplement (20, 21) à denture intérieure.

6. Robot de cuisine selon l'une quelconque des revendications précédentes, caractérisé en ce que la transmission à changement de vitesse (5) présente une transmission intermédiaire (27) tournant lentement et comportant deux paires de roues (17, 18, 29) qui sont continuellement en engagement mutuel.

7. Robot de cuisine selon l'une quelconque des revendications précédentes, caractérisé en ce qu'une roue de transmission (17, 24) tournant rapidement sur l'arbre mené (14) est reliée à une roue dentée (17, 23) qui engrène avec une vis tangente (25) entraînée par le moteur d'entraînement (4).

8. Robot de cuisine selon la revendication 7, caractérisé en ce que le perçage d'accouplement (21) à denture intérieure est ménagé dans la roue dentée (17, 24).
